# EUROPÄISCHE PATENTANMELDUNG

(11) **EP 4 535 621 A1**
(43) Veröffentlichungstag der Anmeldung: **09.04.2025**
(21) Anmeldenummer: 24201354.8
(22) Anmeldetag: 19.09.2024
(51) Int. Cl.: H02K 3/14, H02K 3/26, H02K 15/0414

(54) **MEHRPHASIGE PERMANENTERREGTE SYNCHRONMASCHINE**

(30) Priorität: 06.10.2023 DE 102023127329
(71) Anmelder: eMoSys GmbH, 82319 Starnberg (DE)
(72) Erfinder: ECK, Stephan, 82346 Andechs (DE); GRÜNDL, Andreas, 82319 Starnberg (DE); RASCH, Michael, 82205 Gilching (DE); KÖGELSPERGER, Christian, 82538 Geretsried (DE)
(74) Vertreter: Schmidt, Steffen J.

(57) **Zusammenfassung**

Eine mehrphasige permanenterregte Synchronmaschine ist ausgestaltet mit einem Ständer und einem Läufer in Außen- oder Innenläuferkonfiguration. Der Ständer hat zu bestromende Ständer-Spulen, und der Läufer hat Permanentmagnet-Elemente. Der Ständer ist durch einen Luftspalt von dem Läufer beabstandet. Der Ständer hat Ständer-Zähne, die unter Bildung mehrerer Ständer-Nuten voneinander beabstandet sind. Jede Ständer-Spule ist, einen der Ständer-Zähne unter Bildung zweier Wicklungs-Köpfe umgebend, in zwei Ständer-Nuten aufgenommen. Jede der Ständer-Spulen hat wenigstens zwei Leiter-Abschnitte. Die wenigstens zwei Leiter-Abschnitte bilden zusammen eine Windung der Ständer-Spule. Jeder der zwei Leiter-Abschnitte ist in wenigstens zwei, im Querschnitt zumindest annähernd gleiche, gegeneinander elektrisch isolierte Teil-Leiter gegliedert. Zumindest bei den näher am Luftspalt liegenden Windungen haben die Teil-Leiter des jeweiligen Leiter-Abschnitts entlang der Erstreckung des Teil-Leiters wenigstens zwei Teil-Leiter-Abschnitte. Die Teil-Leiter-Abschnitte des einen Teil-Leiters sind mit den Teil-Leiter-Abschnitten des anderen Teil-Leiters entlang der Erstreckung der Teil-Leiter im Wechsel verbunden.

## Beschreibung

### Gegenstand

Hier wird eine mehrphasige permanentmagneterregte Synchronmaschine (PMSM) offenbart. Diese ist auch in einer Anwendung als elektrischer Flugzeugantrieb einzusetzen. Ein solcher Flugzeugantrieb ist Teil eines Flugzeug-Antriebsstrangs und umfasst eine solche mehrphasige permanenterregte Synchronmaschine. Weitere Baugruppen des Flugzeug-Antriebsstrangs sind eine elektrische Energiequelle, die als Akkumulator, Photovoltaikanordnung und/oder als ein Brennstoffzellenaggregat ausgestaltet sein kann, und die den elektrischen Flugzeugantrieb mit elektrischer Energie speist, sowie optional ein (Untersetzungs-)Getriebe, das zwischen dem elektrischen Flugzeugantrieb und einer Luftschraube, einem Propeller, einer Turbine oder Vergleichbarem eingekoppelt ist. Maschinen der hier offenbarten Art sind als Hochleistungsantriebe mit einem Leistungsgewicht von 10 kW/kg - 25 kW/kg und bis zu 40 kW/kg oder mehr zu realisieren. Details hierzu sind in den Ansprüchen definiert; aber auch die Beschreibung enthält relevante Angaben zur Struktur und zur Funktionsweise sowie zu Varianten der Maschine.

Als elektrische Maschine sind hier sowohl motorisch als auch generatorisch betriebene Maschinen verstanden, als auch Maschinen, die zwischen diesen beiden Betriebsarten wechselnd betrieben werden.

### Hintergrund

Elektrische Maschinen haben einen Ständer und einen Läufer. Der Läufer wird durch magnetische Wechselwirkung mit dem Ständer angetrieben. Die dabei im Betrieb entstehenden magnetischen Wechselfelder in den Maschinenkomponenten führen zur Entstehung von Wirbelströmen. Die Wirbelströme rufen in dem Ständer und dem Läufer Wärme hervor. Hysterese- und Um-Magnetisierungsverluste führen in Blechpaketen von Ständer und Läufer zu einer Wärmeentwicklung. Ist die Wärmeentwicklung zu hoch, kann diese Wärmeentwicklung Komponenten der Maschine schädigen. Insbesondere ist bei permanentmagneterregten elektrischen Maschinen zur Aufrechterhaltung der Magnetisierung die Betriebstemperatur zu begrenzen, um eine Entmagnetisierung zu reduzieren oder zu verhindern.

### Stand der Technik

Im Deutschen Patent 2 77 012 C ist das "Verroebeln" von Leiterstäben elektrischer Maschinen beschrieben. Dabei bestehen Leiter für elektrische Maschinen aus zwei oder mehr Gruppen flacher Teilleiter. Innerhalb jeder Ständer-Nut der elektrischen Maschine sind die Teilleiter jeder Gruppe mit Hilfe von Kröpfungen, die alle untereinander gleich sein können, miteinander verflochten. Die Teilleitergruppen sind durch Zusammenstecken an den abgekröpften Stellen miteinander verdrillt. Jeder Teilleiter hat doppelt so viele Kröpfungen, als die Zahl der vollen Verdrillungsgänge beträgt. So ist jeder Teilleiter durch sämtliche Stellen des Nutquerschnittes geführt, und daher werden in allen parallel geschalteten Teilleitern einer Ständer-Nut gleiche elektromotorische Kräfte induziert und Wirbelströme vermieden. Dazu nehmen die parallel geschalteten Leiter gleiche Teilleiterpositionen in der Ständer-Nut ein. So sind die durch die Nut-Querfelder induzierten Spannungen gleich und demzufolge treten keine Kreisströme auf.

Die DE 195 45 307 beschreibt einen verroebelten Statorwicklungsstab mit erweitertem Feldausgleich, der eine Unterdrückung der Schlingströme und damit eine Abflachung des Temperaturprofils im Leiterstab ermöglichen soll. Dazu haben die Teilleiter in beiden Stirnbügelabschnitten/Wicklungs-Köpfen eine Verdrillung zwischen 60° und 120°, und im Aktivteilabschnitt / in der Ständer-Nut entweder eine Unterverroebelung, d.h. die Verdrillung im Aktivteilabschnitt ist gleichmäßig und kleiner als 360°, oder bei vollständiger 360°-Verdrillung ist im Aktivteilabschnitt in der Aktivteil mitte eine Leerlänge, d.h. ein unverdrillter Abschnitt, vorgesehen, während die Verdrillung im Aktivteilabschnitt außerhalb dieses unverdrillten Abschnitts jeweils eine gleichmäßige 180°-Verroebelung ist.

Weiterer technologischer Hintergrund ist der DE 14 88 769 B zu entnehmen; dort sind zur Kompensation der sog. Schlingströme in den von einem Ende der Stirnbügel (Wicklungskopf) eines Roebelstabes bis zum anderen Ende aus längsgeteilten und voneinander isolierten Teil-leitern aufgebaute Stäbe gezeigt, bei denen außer der Verdrillung in dem in Nuten eingebetteten geraden Teil um einen Umlauf, d.h. um 360°, der Roebelstab eine gleichmäßig verteilte Verdrillung um 90° längs jeden Stirnbügels trägt. Dabei ist in jedem Stirnbügel der Verdrillungssinn gleich, der seinerseits gleich oder entgegengesetzt dem Verdrillungssinn im geraden Teil ist.

In den bekannten, von einer Verroebelung der Teilleiter Gebrauch machenden Ständer-Spulen haben die Teil-Leiter entweder die halbe Breite oder die halbe Höhe der Ständer-Nut. In der Ständer-Nut sind jeweils zwei Teil-Leiter nebeneinander angeordnet. Diese zwei nebeneinander angeordneten Teil-Leiter erfordern zwischen sich eine entsprechende Isolierung. Die Isolierung reduziert das in der Ständer-Nut unterbringbare Leiter-Volumen.

Permanentmagnetisch erregte betriebene Maschinen im Hochleistungssegment sind in ihrer Polwechselfrequenz durch den Aufbau der Ständer-Spulen beschränkt. Für gewöhnlich ist die Ständer-Spule als Kupferlackdraht-Wicklung oder als sog. Hair-Pin-Wicklung realisiert. Eine Hair-Pin-Wicklung ist als Steckspule ausgebildet, die in die Nuten des Ständer-Blechpakets eingefügt sind. Diese Steckspulen, so genannte Hair-pins, sind aus U-förmigen lackierten Kupfer-Flachdrähten gebildet und ähneln in ihrer Geometrie Haarnadeln. Bei beiden Wicklungstypen treten auf Grund von Wirbelstromverlusten vergleichsweise hohe Verluste auf, die aus der für höhere Frequenzen ungünstigen Dicke der Leiter resultieren. Alternativ sind die Ständer-Spulen auch aus HF Litze gefertigt, was ebenfalls zu erhöhten Verlusten führt. Die vermeidet zwar Wirbelstromverluste, aber der mögliche Kupferquerschnitt ist wegen der schlechteren Packungsdichte verringert. Entsprechend sind derartige elektrische Maschinen hinsichtlich ihrer Polpaarzahl oder Drehzahl begrenzt. Zusätzlich ist der Kupferfüllfaktor insbesondere bei einer Kupferlackdraht-Wicklung gering, was zu erhöhter Verlustwärme führt.

### Zugrundeliegendes Problem

Der vorliegenden Lösung liegt das Problem zugrunde, eine hocheffiziente elektrische Maschine mit sehr gutem Leistungsgewicht (Nutzleistung/Gewicht) und minimalem Bauraum bereitzustellen.

### Lösung

Eine elektrische Maschine gemäß Anspruch 1 löst dieses Problem.

Insbesondere ist hier eine mehrphasige permanenterregte Synchronmaschine angegeben, mit einem Ständer und einem Läufer in Innen- oder Außenläuferkonfiguration. Der Ständer hat zu bestromende Ständer-Spulen. Der Läufer hat Permanentmagnet-Elemente. Der Ständer ist unter Bildung eines Luftspaltes von dem Läufer beabstandet. Der Ständer hat mehrere Ständer-Zähne, die unter Bildung mehrerer Ständer-Nuten voneinander beabstandet sind. Jede Ständer-Spule ist, zumindest einen der Ständer-Zähne unter Bildung zweier Wicklungs-Köpfe an kurzen Seiten der Ständer-Zähne wenigstens einmal zumindest annähernd vollständig umgebend, in zwei Ständer-Nuten an langen Seiten der Ständer-Zähne aufgenommen. Jede der Ständer-Spulen hat wenigstens zwei Leiter-Abschnitte. Die wenigstens zwei Leiter-Abschnitte bilden zusammen jeweils wenigstens eine Windung der jeweiligen Ständer-Spule. Jeder der wenigstens zwei Leiter-Abschnitte ist jeweils in wenigstens zwei, im Querschnitt zumindest annähernd gleiche Teil-Leiter gegliedert. Zumindest bei den näher an dem Luftspalt liegenden Windungen haben die Teil-Leiter des jeweiligen Leiter-Abschnitts entlang der Erstreckung des Teil-Leiters um den jeweiligen Ständer-Zahn wenigstens zwei Teil-Leiter-Abschnitte. Die Teil-Leiter-Abschnitte des einen Teil-Leiters sind mit den Teil-Leiter-Abschnitten des anderen Teil-Leiters entlang der Erstreckung der Teil-Leiter im Wechsel verbunden.

So ist eine effiziente elektrische Maschine mit hoher Polpaarzahl und hoher Drehzahl möglich, deren Wirbelstromverluste in der Ständer-Spule minimiert sind. Dazu ist der Spulenaufbau sowohl in Richtung der Längs- als auch der Höhenerstreckung der Ständer-Nut stark segmentiert und der Kupferfüllfaktor mit 90% und mehr gegenüber herkömmlichen Spulenaufbauten mit einem Kupferfüllfaktor von etwa 50% maximiert. Dies ist zum Beispiel mit Hair-Pin- / lackierten Kupferdrahtwicklungen nicht möglich. In einer Variante trennt eine Isolations-Schicht die flachen, radial dünnen Leiter voneinander. Die Leiter können an Betriebs-Strom und -Spannung sowohl durch Wahl der Windungszahl als auch durch entsprechendes parallel- und in Serie-Schalten angepasst sein.

In der hier offenbarten Variante kann die wechselnde Verbindung der Teil-Leiter-Abschnitte des einen Teil-Leiters mit den Teil-Leiter-Abschnitten des anderen Teil-Leiters entlang der Erstreckung der Teil-Leiter sowohl in den Wicklungs-Köpfen als auch in den Längsabschnitten der Teilleiter erfolgen, welche in den Ständer-Nuten angeordnet sind. Um Ausgleichsströme zu vermeiden, wird mit entsprechender Durchkontaktierung im Wickelkopf und/oder in den in den Ständer-Nuten befindlichen Bereichen der Teil-Leiter-Abschnitte die wechselnde Verbindung realisiert.

Weitere Ausgestaltungen sind in den abhängigen Ansprüchen angegeben. Bei Bereichsangaben gelten hier sämtliche Zwischenwerte einschließlich der Endwerte des angegebenen Bereichs als offenbart.

In einer Variante der Synchronmaschine sind zumindest bei den näher an dem Luftspalt liegenden Windungen die im Bereich des einen Wicklungskopfes befindlichen Teil-Leiter-Abschnitte des einen Leiter-Abschnitts mit den Teil-Leiter-Abschnitten eines anderen, beispielsweise benachbarten, Leiter-Abschnitts im Wechsel verbunden sind. Dies erreicht eine weitergehende Vertauschung der Stromführung über die Höhe der Ständer-Nut, wodurch die Wirbelstromverluste weiter sinken.

In einer Variante der Synchronmaschine haben zumindest zwei zueinander benachbarte der Windungen eine gerade Anzahl an Leiter-Abschnitten. Die Leiter-Abschnitte der zwei benachbarten Windungen sind in der Ständer-Nut übereinander angeordnet. Bei beiden der zwei Windungen sind jeweils eine obere Hälfte der Leiter-Abschnitte und eine untere Hälfte der Leiter-Abschnitte im Bereich eines Wicklungskopfes miteinander verbunden. Die obere Hälfte der miteinander verbundenen Leiter-Abschnitte der oberen der zwei Windungen ist mit der unteren Hälfte der miteinander verbundenen Leiter-Abschnitte der unteren der zwei Windungen verbunden, und die untere Hälfte der miteinander verbundenen Leiter-Abschnitte der oberen der zwei Windungen ist mit der oberen Hälfte der miteinander verbundenen Leiter-Abschnitte der unteren der zwei Windungen verbunden.

Diese Maßnahme erweitert das Vertauschen der Position der Leiter-Abschnitte in der Ständer-Nut von einer Windung auf zwei oder mehr Windungen. Das hier definierte wechselweise Verbinden strebt einen Ausgleich der Summen der Querspannungen an, welchen die einzelnen Leiter-Abschnitte der Windungen in der Ständer-Nut ausgesetzt sind.

In einer Variante der Synchronmaschine haben die Teil-Leiter-Abschnitte der Teil-Leiter zumindest über wesentliche Teile ihrer Längserstreckung eine Querabmessung, die einer Querabmessung der Ständer-Nuten im Wesentlichen entspricht. Dies ist im Unterschied zu den herkömmlichen Anordnungen von Ständer-Spulen zu sehen. Bei diesen herkömmlichen Anordnungen nehmen die Teil-Leiter entweder die halbe Breite oder die halbe Höhe der Ständer-Nut ein, wobei in der Ständer-Nut jeweils zwei Teil-Leiter nebeneinander angeordnet sind. Diese zwei nebeneinander angeordneten Teil-Leiter erfordern zwischen sich eine entsprechende Isolierung, die das in der Ständer-Nut unterbringbare Leiter-Volumen reduziert.

In einer Variante der Synchronmaschine haben wenigstens zwei der Windungen der Ständer-Spule eine voneinander abweichende Querschnittsfläche. Die wenigstens zwei Leiter-Abschnitte wenigstens einer der Windungen der Ständer-Spule mit der geringeren Querschnittsfläche sind dem Luftspalt näher in den Ständer-Nuten angeordnet, als die wenigstens zwei Leiter-Abschnitte wenigstens einer der Windungen der Ständer-Spule mit der größeren Querschnittsfläche. Dies ist im Unterschied zu den herkömmlichen Anordnungen von Ständer-Spulen zu sehen. Bei diesen herkömmlichen Anordnungen haben die Teil-Leiter der Ständer-Spule identische Querschnittsflächen.

Die hier offenbarte Synchronmaschine basiert auf einem oder mehreren der vorstehenden Prinzipien, die wie folgt zusammengefasst sind:
- Die Anzahl der Leiter-Abschnitte pro Windung steigt mit der Höhe der Windung im Nut-Spalt;
- Die Querschnittsfläche der Leiter-Abschnitte pro Windung sinkt mit der Höhe der Windung im Nut-Spalt;
- Die Anzahl der Verbindungen, mit denen die Teil-Leiter-Abschnitte der unterschiedlichen Leiter-Abschnitte einer Windung wechselnd verbunden sind, steigt mit der Höhe der Windung im Nut-Spalt;
- bei höher im Nut-Spalt befindlichen Windungen sind die im Wicklungskopf miteinander verbundenen Teil-Leiter benachbarter Windungen wechselnd verbunden.

Diese einzelnen Maßnahmen sind auch kombinierbar, um abhängig von den elektrischen und mechanischen Anforderungen (Strom, Spannung, Frequenz, Polzahl, Maschinenlänge, Maschinendurchmesser, Spitzen- und Dauerleistung, etc. die Synchronmaschine zu optimieren.

In einer Variante ist der Ständer der mehrphasigen permanenterregten Synchronmaschine aus einer Vielzahl längs der Mittellängsachse der Synchronmaschine angeordneter Ständer-Bleche gebildet. Die Ständer-Bleche enthalten in einer Variante Weicheisen, Kobalt, Nickel oder Legierungen hieraus. Dabei können die Ständer-Bleche NiFe-Legierungen mit etwa 72 - etwa 83 % Ni, mit etwa 54 - etwa 68 % Ni, mit etwa 45 - etwa 50 % Ni, oder CoFe-Legierungen mit 17 - 50 % Co enthalten. Die Ständer-Bleche können eine Dicke von etwa 10 µm bis etwa 250 µm, zum Beispiel 200 µm Dicke, aufweisen.

NiFe-Legierungen mit 72 - 83 % Ni sind magnetisch sehr weiche Werkstoffe mit hoher Anfangs- und Maximalpermeabilität und einer geringen Koerzitivfeldstärke. NiFe-Legierungen mit 54 - 68 % Ni können mittels einer magnetfeldinduzierten Vorzugsrichtung (Magnetfeldtemperung) hohe Anfangs- und Maximalpermeabilitäten aufweisen. Bei NiFe-Legierungen mit 45 - 50 % Ni kann durch Wahl der Walzschritte und Zwischenglühungen das Hystereseverhalten angepasst werden. Kobalt-Eisen-Legierungen haben mit etwa 2,35 T eine sehr hohe Sättigungspolarisation. Sie können eine sehr kleine Koerzitivfeldstärke (Hc ≤ 0,4 A/cm) bei besonders geringen Verlusten und sehr guten mechanischen Eigenschaften haben.

Die Ständer-Bleche sind in einer Variante aus einer kornorientierten Eisen-Silizium-Legierung - FeSi - gebildet, mit einer Isolierung der einzelnen, zum Beispiel 50 µm - 250 µm dicken Bleche. Damit sind Wirbelströme und in der Folge Wirbelstromverluste sehr gering zu halten. Ständer-Bleche aus Eisen-Silizum erreichen zwar nur geringere Leistungsdaten, jedoch zu deutlich geringeren Kosten.

Nach jedem 10. - 50. Ständer-Blech des den Ständer bildenden Blechstapels kann in einer Variante zum Beispiel nach jedem 30. Ständer-Blech, eine Graphitfolie mit eine Dicke von etwa 10 µm bis etwa 100 µm, zum Beispiel 50 µm Dicke, angeordnet sein.

Anstelle einer Graphitfolie sind in einer Variante die Ständer-Bleche mit Graphen oder DLC - diamond-like carbon beschichtet. So hat DLC eine sehr hohe Wärmeleitfähigkeit (etwa 5-mal so hoch wie die Wärmeleitfähigkeit von Kupfer).

Graphitfolien sind wärmeleitend und enthalten natürlichen oder synthetischen Graphit und haben keine elektrische Isolation. Wegen ihrer Beschaffenheit passen sich die wärmeleitenden Graphitfolien den Kontaktflächen zu den darüber- und darunterliegenden Ständer-Blechen sehr gut an. Graphitfolien kombinieren eine hohe Wärmeleitfähigkeit mit einem sehr geringen thermischen Kontaktwiderstand. Die Wärmeleitfähigkeit der Graphitfolie in X/Y-Richtung (Fläche) und in Z-Richtung (zu kontaktierende Oberflächen) ist anisotrop. Zur Anisotropie kommt eine Gewichtseinsparung im Vergleich zu anderen thermischen wirksamen Materialien und eine hohe Temperaturbeständigkeit (-40° C bis 400° C) der Graphitfolien.

Bei den Ständer-Blechen, an denen eine Graphitfolie anliegt, oder die mit Graphen oder DLC beschichtet sind, kann die Isolierung entfallen um die Wärmeleitung zu verbessern.

Bei einer Variante der Synchronmaschine umgibt jeder Leiter-Abschnitt einen der Ständer-Zähne wenigstens einmal zumindest annähernd vollständig.

Bei einer Variante der mehrphasigen permanenterregten Synchronmaschine sind die Teil-Leiter-Abschnitte als Ausschnitte aus elektrisch leitenden Metall-Platten oder Metall-Folien, umfassend Kupfer, Aluminium oder dergl. gebildet. Diese elektrisch leitenden Metall-Platten oder Metall-Folien sind zumindest an einigen ihrer Ober-, Unter- oder Seiten-Flächen gegeneinander und/oder gegen Wände der Ständer-Nuten und/oder des Ständer-Zahns durch Isolations-Schichten elektrisch isoliert.

Bei einer Variante haben die Isolations-Schichten Epoxid-Harz, halogenfreies Epoxid-Harz, PTFE, PEEK, Polyimid, Polyamid, anodisch oder kathodisch aufgebrachten Tauchlack, elektro-statischen Pulverlack, eine durch PVD, CVD oder nass-chemisch aufgebrachte und/oder eloxierte Aluminium-Schicht, Keramik-Beschichtung aus z.B. Al2O3, Si3N4, Glas oder dergl. Bei einer Variante haben die Isolations-Schichten eine Schichtdicke in einem Bereich von 30 µm bis 3 µm, oder weniger als 15 µm. Bei einer Variante haben die Teil-Leiter-Abschnitte zumindest einige, zumindest abschnittsweise verrundete Kanten. Bei einer Variante haben die Teil-Leiter-Abschnitte gegenüber wenigstens einigen ihrer Isolations-Schichten Untermaß oder zumindest annähernd Gleichmaß, insbesondere in Richtung einer seitlichen Wand der Ständer-Nut und/oder des Ständer-Zahns.

Bei einer Variante der mehrphasigen permanenterregten Synchronmaschine sind die Teil-Leiter-Abschnitte und die Isolations-Schichten als zwei- oder mehrlagige Spulenstrukturen mit zum Beispiel flexibler Leiterplatte oder Keramikplatte als Verbindungschicht in Form von Direct Copper Bonded - DCB - Substrate, Direct Bond Copper - DBC - Substrate, Copper Plated Ceramic - CPC - Substrate als Verbindungsschicht ausgestaltet. Bei einer Variante sind Durchkontaktierungsflächen zum wechselnden Verbinden der Teil-Leiter-Abschnitte des einen Teil-Leiters mit den Teil-Leiter-Abschnitten des anderen Teil-Leiters entlang der Erstreckung der Teil-Leiter vorgesehen. Bei einer Variante sind die Teil-Leiter-Abschnitte des einen Teil-Leiters mit den Teil-Leiter-Abschnitten des anderen Teil-Leiters entlang der Erstreckung der Teil-Leiter mittels Silbersinterung verbunden. Bei einer Variante sind die Leiter-Abschnitte der Ständer-Spule mit unterschiedlicher Querschnittsfläche durch zum Beispiel laserverschweißte oder laserverlötete Vertikalverbinder verbunden.

Zur Verbindung der keramischen Isolations-Schicht mit Teil-Leiter-Abschnitten aus zum Beispiel Kupfer ist in einer Variante auch ein AMB Prozess - active metal brazing - einsetzbar, bei dem eine Lage aus Kupfer mit der erforderlichen Dicke mit einem Hochtemperaturlot mit der keramischen Isolations-Schicht verbunden wird.

DBC Substrate haben Keramik-Substrate aus Si3N4 (Siliziumnitrid), Al2O3 (Aluminiumoxid) oder AIN (Aluminiumnitrid). Diese Materialien haben sehr gute Wärmeleiteigenschaften (Al2O3 >30W/mK, Si3N4 > 90 W/mK, AIN > 170 W/mK) auch in Richtung der Ständer-Zähne. Siliciumnitrid ist eine Nichtoxidkeramik mit sehr guten Werkstoffeigenschaften. Dazu gehören eine hohe Bruchzähigkeit (5 - 8 MPa/m²) in Verbindung mit einer sehr hohen Biegefestigkeit (800 - 1000 MPa) und einem niedrigen Wärmeausdehnungskoeffizienten (3,5 ppm/K). Die metallischen Spulen-Stücke (Teil-Leiter, Teil-Leiter-Abschnitte) sind je nach Vorbereitung durch Sintern, Löten, Schweißen und Drahtbonden verbindbar.

Direct copper bonded (DCB) Substrate und Direct Bond Copper (DBC) Substrate haben aus einen keramischen Isolator aus Aluminiumoxid oder Aluminiumnitrid, auf denen zum Beispiel in einem Hochtemperaturschmelz- und Diffusionsprozess, oder in einem Plattierungsprozess eine oder mehrere Metall-Lagen, zum Beispiel reines Kupfer, aufgebracht und haftfest mit der Keramik verbunden ist. Die hohe Wärmeleitfähigkeit von Al2O3 (10 - 30 W/mK je nach Reinheitsgrad) und AIN (130 bis 180 W/mK) sowie die hohe Wärmekapazität und Wärmespreizung der dicken Metall-Beschichtung sind für die elektrische Maschine sehr vorteilhaft.

Auch die mechanische Stressbelastung der aus der Metall-Beschichtung gebildeten Spulen ist hierbei gering, da der Wärmeausdehnungskoeffizient mit 7,1 ppm/K bei Al2O3 und 4,1 ppm/K bei AIN dem des Metalls (zum Beispiel Cu ca. 15 ppm/K) besser angepasst ist, als jener von Substraten auf Kunststoffbasis. Insgesamt eignen sich derartige Substrate wegen ihrer hohen Wärmeleitfähigkeit und Temperaturbeständigkeit, ihrer hohen Isolationsspannung, ihrer hohen Wärmespreizung und ihrem angepassten Ausdehnungskoeffizienten sehr gut für diesen Einsatz. Keramik hat keine Kriechstromprobleme und einen hohen CTI Wert - Comparative Tracking Index. CPC Substrate haben Basismaterialien, auf die zum Beispiel reines Kupfer galvanisch aufgebracht wird. Die Basismaterialien umfassen Al2O3 (Aluminiumoxid) oder AIN (Aluminiumnitrid), BeO (Berylliumoxid), auf dieses Substrat werden mehrere 100 µm Cu galvanisch entsprechend der Struktur der Spule abgeschieden. Die hohe Wärmeleitfähigkeit von Al2O3 (10 - 30 W/mK je nach Reinheitsgrad) und AIN (130 bis 180 W/mK) und die hohe Wärmekapazität und Wärmespreizung der dicken Kupferbeschichtung bieten einen effizienten Einsatz in der vorliegenden Lösung. Bei CPC Substraten können auch sehr gut leitende Verbindungen von der Oberseite zur Unterseite des Substrates realisiert werden. Die Löcher / Vias können vorher in das Keramik-Substrat eingebracht werden.

Die hier offenbarten Varianten der Ständer-Spulen sind geometrisch und mechanisch sehr präzise herzustellen. Zusätzlich sind die hier offenbarten Varianten der Isolierungen der Ständer-Spulen für die erforderliche Spannungsfestigkeit sehr dünn und ebenfalls sehr präzise herstellbar. Damit kann eine Maschine realisiert werden, die einerseits Ständer-Spulen hat, die wegen des oben beschriebenen wechselseitigen Verbindens der Teil-Leiter und/oder der Leiter-Abschnitte, und/oder der unterschiedlich dicken Leiter und/oder der Anzahl der Leiter-Abschnitte der einzelnen Windungen in Abhängigkeit von ihrer Höhen-Lage in der Ständer-Nut eine sehr hohe Stromtragfähigkeit und geringere Stromwärme-Verluste haben, und die andererseits sehr gut entwärmbar sind, da durch die sehr dünnen und präzise zu fertigenden Isolierungen der Ständerspulen sehr gute Wärmeübergänge aus den Ständer-Spulen in die Stator-Zähne oder die Wände der Ständer-Nuten definierbar und effizient zu realisieren sind.

So erlaubt die hier vorgestellte Lösung, anstelle eines herkömmlichen Leitungs-Füllfaktors von etwa 50% (und etwa 50 % Isolierung) einen Leitungs-Füllfaktor von etwa 95% (und etwa 5 % Isolierung) bezogen auf das Volumen der Ständer-Nut zu realisieren. Hierdurch kann die Verlustleistung um etwa 1/3 und mehr sinken.

Bei einer Variante der mehrphasigen permanenterregten Synchronmaschine sind die Teil-Leiter-Abschnitte aus kupfer- oder aluminiumhaltigen Strukturen durch Stanzen oder Schneiden gebildet, mit einer Keramikplatte, einer flexiblen Leiterplatte oder einer Glasplatte als Isolations-Schicht. Die Teil-Leiter-Abschnitte sind in einer Variante miteinander zum Beispiel diffusionsverschweißt.

Bei einer Variante sind an den Teil-Leiter-Abschnitten Durchkontaktierungsstellen mit einer Erhöhung vorgesehen, die in einem Hoch-Prägevorgang erstellt sind.

Bei einer Variante haben die Teil-Leiter-Abschnitte zumindest teilweise verrundete Kanten.

Bei einer Variante sind die Teil-Leiter-Abschnitte umlaufend mit einer Keramikschicht als Isolations-Schicht versehen. Die Isolations-Schicht hat eine Dicke von etwa 10 - 100 µm. Bei einer Variante sind die Teil-Leiter-Abschnitte umlaufend mit einer Kunststoffschicht als Isolations-Schicht versehen sind. Die Isolations-Schicht hat eine Dicke von etwa 5 - 50 µm.

Bei einer Variante haben die Teil-Leiter-Abschnitte Flachsenkungen zur Durchkontaktierung. Bei einer Variante sind zumindest einige der Teil-Leiter mit einem oder mehreren benachbarten Teil-Leitern mittels Kontakt-Stiften verbunden.

Bei einer Variante haben die Leiter-Abschnitte der Ständer-Spule im äußeren Bereich zumindest eines ihrer Wickelköpfe Verbinder zu benachbarten Leiter-Abschnitten einer Ansteuerelektronik.

Bei einer Variante der mehrphasigen permanenterregten Synchronmaschine ist bei wenigstens einer, dem Luftspalt näheren Windung der Ständer-Spule wenigstens ein aus einer HF-Litze gebildeter Leiter-Abschnitt vorgesehen, und die HF-Litze ist mit einem dem Luftspalt ferner liegenden Leiter-Abschnitt verbunden, zum Beispiel verschweißt.

Im Übrigen ist hier als einer von mehreren möglichen Einsatzbereichen ein elektrischer Flugzeugantrieb offenbart, umfassend eine mehrphasige permanentmagneterregte Synchronmaschine mit einem oder mehreren der vorhergehenden Merkmale. Ein solcher elektrischer Antrieb - auch für andere Einsatzzwecke - ist mit sehr hoher spezifischer Massenleistung von bis zu 40 kW/kg realisierbar gegenüber ca. 6 kW/kg heutiger spezifischer Massenleistung.

Die elektrische Maschine hat einen Permanentmagnet-Läufer und Ständer-Spulen. Die Ständer-Spulen erzeugen im Luftspalt der Maschine eine von dem Betriebs-Wechselstrom hervorgerufene, sinusförmige und je nach Betriebsart winkelabhängige magnetische Flussdichte. Wegen der Permanentmagnet-Erregung kann die elektrische Maschine auch aus dem Stand heraus unter Last anfahren. Für den Betrieb liefert ein vorzugsweise digitaler Pulsweitenmodulations-Wechselrichter für die einzelnen Wicklungen die erforderliche elektrische Leistung in entsprechender Phasenlage. Die elektrische Maschine ist in unterschiedlichen Varianten drehzahlgeregelt oder drehmomentgeregelt zu betreiben.

### Kurzbeschreibung der Figuren

Weitere Merkmale, Eigenschaften, Vorteile, Zweckmäßigkeiten der Vorrichtungen und der Verfahrensweisen sind der nachfolgenden Beschreibung in Verbindung mit der Zeichnung zu entnehmen. Auch mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen.

Hierbei zeigen:
Fig. 1 in einer schematischen Darstellung eine fluidgekühlte, mehrphasige permanenterregte Synchronmaschine als Anwendungsfall in einem Flugzeug-Antriebsstrang;
Fig. 2 in einer schematischen teilweisen Querschnitt-Darstellung die mehrphasige permanenterregte Synchronmaschine, mit einem Ständer und einem Läufer in Innenläuferkonfiguration;
Fig. 3 in einer schematischen teilweisen Querschnitt-Darstellung den Ständer der permanenterregten Synchronmaschine aus Fig. 2;
Fig. 4 in einer schematischen Darstellung eine Ständer-Wicklung mit sechs Windungen einer mehrphasigen permanenterregten Synchronmaschine;
Fig. 4a in einer schematischen Darstellung eine Windung der Ständer-Wicklung aus Fig. 4;
Fig. 5 in einer schematischen Draufsicht-Darstellung wie die Leiter-Abschnitte der Ständer-Spule im Nutzen herstellbar sind;
Fig. 6 in einer schematischen, vergrößerten perspektivischen Darstellung, wie die übereinander gelegten Teil-Leiter-Abschnitte zweier Teil-Leiter elektrisch zu verbinden sind; und
Fig. 7 in einer schematischen teilweisen Querschnitt-Darstellung die Ständer-Spule aus den Fig. 2 und 3 mit den Isolations-Schichten zwischen den einzelnen Teil-Leiter-Abschnitten.

### Detaillierte Beschreibung von Varianten der Vorrichtungen und der Verfahrensweisen

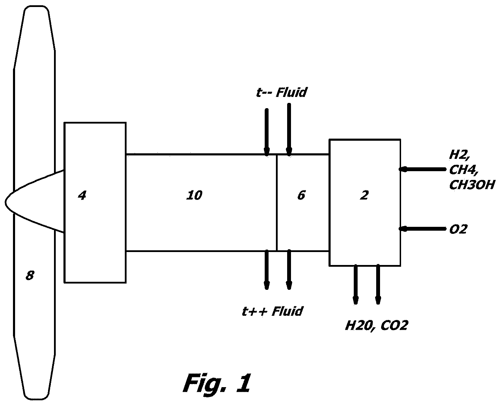

Fig. 1 veranschaulicht als einen möglichen Einsatzfall der hier veranschaulichten permanenterregten Synchronmaschine einen Flugzeug-Antriebsstrang, in dem ein elektrischer Flugzeugantrieb realisiert ist. Dieser Flugzeugantrieb ist Teil eines Flugzeug-Antriebsstrangs und umfasst eine hier auch offenbarte fluidgekühlte, permanentmagneterregte Synchronmaschine 10. Weitere Baugruppen des Flugzeug-Antriebsstrangs sind eine elektrische Energiequelle 2, die z.B. wie hier gezeigt als Wasserstoff-, Methan-, oder Methylalkohol-gespeistes Brennstoffzellenaggregat mit Wasser und/oder Kohlendioxid als Abgas ausgestaltet sein kann. Alternativ können auch zum Beispiel ein Akkumulator oder solarstromgespeiste Ultracaps zum Speisen des elektrischen Flugzeugantriebs mit elektrischer Energie vorgesehen sein. Zwischen die Energiequelle 2 und die Synchronmaschine 10 ein mehrphasiger Wechselrichter 6 geschaltet. Die Synchronmaschine 10 und der Wechselrichter 6 sind fluidgekühlt, wobei das Fluid durch einen nicht weiter veranschaulichten Wärmetauscher im Kreislauf geführt ist.

Optional ist ein (Untersetzungs-)Getriebe 4 ist zwischen dem elektrischen Flugzeugantrieb und einer Luftschraube, einem Propeller oder einer Turbine 8 eingekoppelt. Abhängig von der Drehzahl-/Drehmoment-Auslegung der Synchronmaschine 10 kann das Getriebe 4 auch entfallen. In den veranschaulichten Flugzeug-Antriebsstrang ist die Kühlung der elektrischen Maschine und ggf. deren Rotor getrennt und parallel zur Kühlung der Leistungselektronik realisiert. Es ist auch möglich, andere Kühlarchitekturen zu verwenden und/oder den Rotor der elektrischen Maschine nicht fluidgekühlt auszulegen.

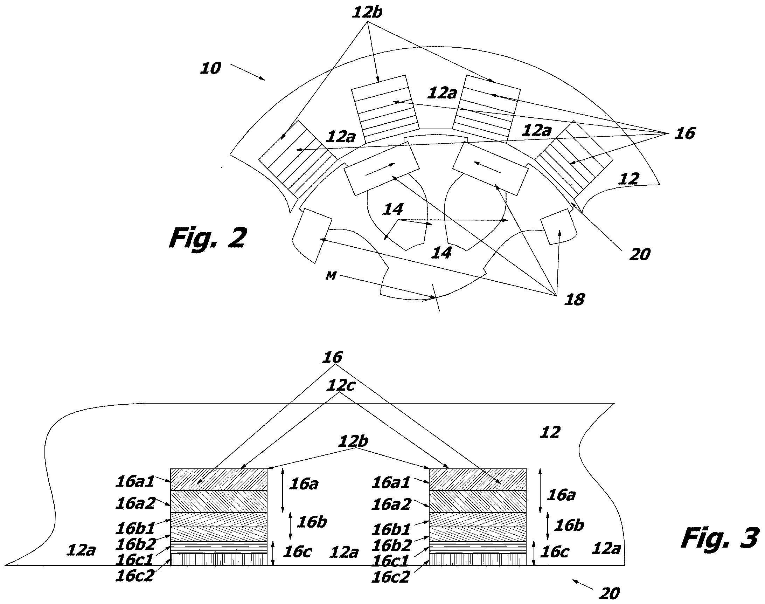

Fig. 2 veranschaulicht die mehrphasige permanenterregte Synchronmaschine 10, mit einem Ständer 12 und einem Läufer 14 in Innenläuferkonfiguration.

Eine solche PMSM ist zum Beispiel in dem Antriebsstrang der Fig. 1 einzusetzen. Der Ständer 12 der Synchronmaschine 10 hat zu bestromende Feldspulen 16, und der Läufer 14 hat Permanentmagnet-Elemente 18. Der Ständer 12 ist durch einen Luftspalt 20 von dem Läufer 14 radial beabstandet. Der Läufer 14 umfasst einen Stapel aus Läufer-Blechen. Dieser Stapel aus Läufer-Blechen trägt zwischen radial nach außen gerichteten Stegen 14a an seinem äußeren Umfang eine Vielzahl Permanentmagnet-Elemente 18. Die Läufer-Bleche sind zumindest nahezu unmagnetisch, insbesondere paramagnetisch. In einer nicht näher veranschaulichten Variante sind im Bereich zwischen den Permanentmagnet-Elementen 18 Flussleitstücke aus geblechtem Material zum Führen und Ausrichten des magnetischen Flusses vorgesehen. Das unmagnetische Material der Läufer-Bleche beginnt dabei radial weiter innen liegend bei den in Fig. 2 veranschaulichten Speichen und reicht bis zum Zentrum der Läufer-Bleche.

Die Feldspulen 16 sind bei einer Nenndrehzahl von zum Beispiel etwa 14000 - etwa 16500 Upm mit einer Polwechselfrequenz von zum Beispiel etwa 3000 - etwa 5000 Hz aus dem nicht näher veranschaulichten Wechselrichter 6 zu bestromen. Der Wechselrichter 6 hat eine Leistungselektronik.

Dieser Aufbau erlaubt zum Beispiel eine Maschine 10 mit einem Drehmoment von mehr als etwa 380 Nm, die eine Gesamtlänge von etwa 450 mm einschließlich des Wechselrichters 6 und einen maximalen Durchmesser von etwa 300 mm hat. Die abgebbare Leistung im Dauerbetrieb der Maschine beträgt zum Beispiel etwa 500 - 800 kW bei einer Nenndrehzahl von etwa 12000 UPM bis etwa 18000 UPM, wobei die Gesamtmasse von Maschine und Wechselrichter 6 etwa 35 - 50 kg beträgt. Der Gesamtwirkungsgrad von Maschine 10 und Wechselrichter 6 kann dabei zum Beispiel etwa 96 % betragen, was eine hocheffiziente Maschine mit sehr gutem Leistungsgewicht und minimalem Bauraum darstellt.

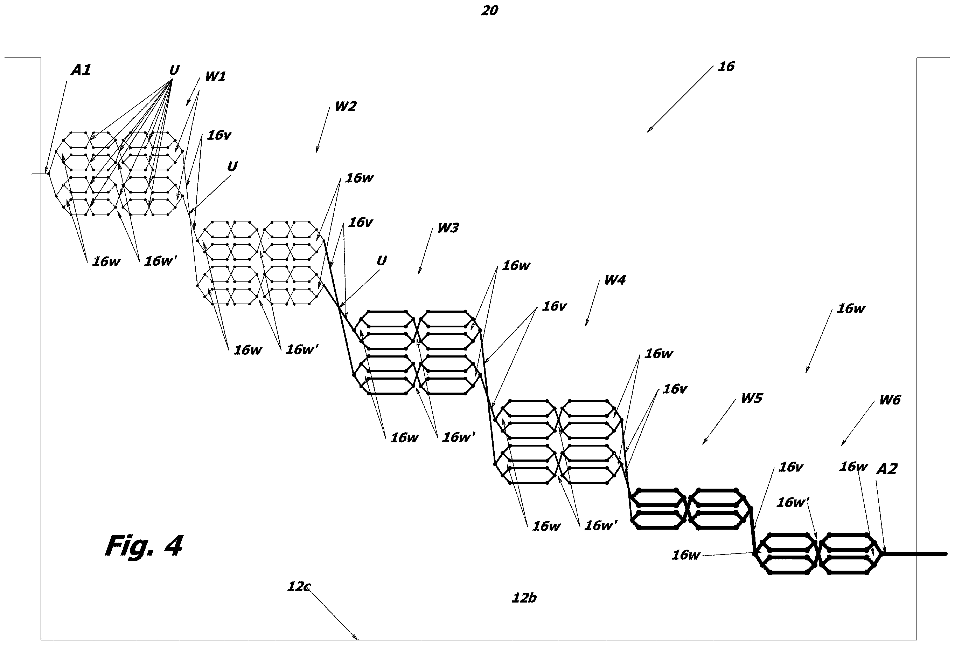

Der Ständer 12 hat an seinem zum Luftspalt 20 hin orientierten inneren Umfang verteilt mehrere Ständer-Zähne 12a, die unter Bildung mehrerer Ständer-Nuten 12b voneinander beabstandet sind. Jede Ständer-Spule 16 ist, einen der Ständer-Zähne 12a umgebend, in zwei benachbarten Ständer-Nuten 12b aufgenommen. In der Fig. 3 ist der Querschnitt durch die Ständer-Spule 16 vergrößert gezeigt. Jede Ständer-Spule 16 hat in der hier gezeigten Variante drei Leiter-Abschnitte 16a; 16b; 16c; es sind auch mehr als drei Leiter-Abschnitte möglich, wie zum Beispiel in Fig. 4, 4a veranschaulicht ist. In Fig. 3 ist jeder der drei Leiter-Abschnitte jeweils in zwei, im Querschnitt annähernd gleiche, gegeneinander elektrisch isolierte Teil-Leiter 16a1, 16a2; 16b1, 16b2; 16c1, 16c2 gegliedert. Wenigstens zwei der Leiter-Abschnitte 16a; 16b; 16c haben eine voneinander abweichende Querschnittsfläche. In der hier gezeigten Variante nimmt die Querschnittsfläche ab, je weiter die Leiter-Abschnitte 16a; 16b; 16c und deren Teil-Leiter 16a1, 16a2; 16b1, 16b2; 16c1, 16c2 vom Nut-Grund 12c der Ständer-Nut 12b entfernt liegen. Dabei füllen die Leiter-Abschnitte 16a; 16b; 16c und deren Teil-Leiter 16a1, 16a2; 16b1, 16b2; 16c1, 16c2 die Ständer-Nut 12b in der QuerErstreckung der Ständer-Nut 12b - bis auf eine weiter unten detaillierte erläuterte Isolations-Schicht zu den beiden parallelen Seiten-Wänden der Ständer-Nut 12b hin - praktisch vollständig aus. Somit nimmt die Dicke der Leiter-Abschnitte 16a; 16b; 16c und deren Teil-Leiter 16a1, 16a2; 16b1, 16b2; 16c1, 16c2 in Richtung der Höhe der Ständer-Nut 12b zum Luftspalt 20 hin ab.

Jede Ständer-Spule 16 umgibt in der hier veranschaulichten Variante einen der Ständer-Zähne 12a und ist unter Bildung zweier Wicklungs-Köpfe 16w, 16w' an kurzen Seiten der Ständer-Zähne 12a in zwei Ständer-Nuten 12b an langen Seiten der Ständer-Zähne 12a aufgenommen.

Mit Bezug auf die Fig. 4 und 4a ist ein mögliches Verschaltungsschema der Ständer-Spule 16, ihrer Windungen W1 ... W6, deren Leiter-Abschnitte 16a; ... 16d, ihrer Teil-Leiter 16a1, 16a2; ... 16d1, 16d2, und ihrer Teil-Leiter-Abschnitte 16a1a, 16a1b, 16a1c, 16a1d; 16a2a; 16a2b, 16a2c, 16a2d; ... 16d1a; 16d1b, 16d1c, 16d1d; 16d2a, 16d2b, 16d2c, 16d2d dargestellt. Die einzelnen Komponenten der Ständer-Spule 16 sind in Fig. 4a mit Bezugszeichen versehen. In Fig. 4 ist das Verschaltungsschema als Ganzes gezeigt; der besseren Übersicht wegen sind hier die Bezugszeichen teilweise weggelassen.

In der Fig. 4a ist eine Windung Wn der Ständer-Spule 16 veranschaulicht. Die Windung Wn hat hier vier Leiter-Abschnitte 16a ... 16d, die zusammen eine Windung W1, ... W6 der Ständer-Spule 16 aus der Fig. 4 bilden. Jeder der vier Leiter-Abschnitte 16a ... 16d ist in dieser Variante in zwei, im Querschnitt gleiche Teil-Leiter 16a1, 16a2; ... 16d1, 16d2 gegliedert. Im ersten Wicklungskopf 16w (in Fig. 4a links) sind die Teil-Leiter 16a1, 16a2; ... 16d1, 16d2 der vier Leiter-Abschnitte 16a ... 16d jeweils miteinander verbunden. Außerdem sind die Enden der oberen zwei und die unteren zwei der vier Leiter-Abschnitte 16a ... 16d jeweils miteinander verbunden. Diese beiden Paare der oberen zwei und der unteren zwei der vier Leiter-Abschnitte 16a ... 16d sind ebenfalls miteinander verbunden und bilden hier den ersten Anschluss A1 der Windung Wn der Ständer-Spule 16.

Bei der in Fig. 4a veranschaulichten Windung Wn der Ständer-Spule 16 haben die Teil-Leiter 16a1, 16a2 ... 16d1, 16d2 des jeweiligen Leiter-Abschnitts 16a ... 16d entlang der Erstreckung des Teil-Leiters 16a1, 16a2 ... 16d1, 16d2 um den jeweiligen Ständer-Zahn 12a zwei Teil-Leiter-Abschnitte 16a1a, 16a1b, 16a1c, 16a1d; 16a2a; 16a2b, 16a2c, 16a2d ... 16d1a; 16d1b, 16d1c, 16d1d; 16d2a, 16d2b, 16d2c, 16d2d. Diese Teil-Leiter-Abschnitte 16a1a, 16a1b, 16a1c, 16a1d; 16a2a; 16a2b, 16a2c, 16a2d ... 16d1a; 16d1b, 16d1c, 16d1d; 16d2a, 16d2b, 16d2c, 16d2d des einen Teil-Leiters 16a1, 16a2 ... 16d1, 16d2 sind mit den Teil-Leiter-Abschnitten 16a1a, 16a1b, 16a1c, 16a1d; 16a2a; 16a2b, 16a2c, 16a2d ... 16dla; 16d1b, 16d1c, 16d1d; 16d2a, 16d2b, 16d2c, 16d2d des anderen Teil-Leiters 16a1, 16a2 ... 16d1, 16d2 entlang der Erstreckung der Teil-Leiter 16a1, 16a2 ... 16d1, 16d2 im Wechsel verbunden. So ist hier der erste Teil-Leiter-Abschnitt 16a1a des obersten, ersten Teil-Leiters 16a1 mit dem zweiten Teil-Leiter-Abschnitt 16a2b des zweiten Teil-Leiters 16a2 des obersten, ersten Leiter-Abschnitts 16a verbunden, und der erste Teil-Leiter-Abschnitt 16a2a des zweiten Teil-Leiters 16a2 mit dem zweiten Teil-Leiter-Abschnitt 16a1b des obersten Teil-Leiters 16a1 des ersten Leiter-Abschnitts 16a verbunden. Hieraus ergibt sich eine wechselseitige Überkreuzung U der Leitungsführung durch die einzelnen Teil-Leiter-Abschnitte des obersten Teil-Leiters 16a. In den Fig. 4, 4a sind die Enden der Teil-Leiter-Abschnitte, an denen eine Verbindung zu einem anderen Leiter oder einer Durchkontaktierung vorgesehen ist, mit einem Punkt gekennzeichnet.

In gleicher Weise sind die ersten Teil-Leiter-Abschnitte 16b1a ... 16d1a der jeweiligen oberen, ersten Teil-Leiter 16b1 ... 16d1 der zweiten bis vierten Leiter-Abschnitte 16b ... 16d mit den jeweiligen unteren zweiten Teil-Leiter-Abschnitten 16a2b ... 16d2b der zweiten bis vierten jeweiligen unteren, zweiten Teil-Leiter 16b1 ... 16d1 der zweiten bis vierten Leiter-Abschnitte 16b ... 16d verbunden, und die ersten Teil-Leiter-Abschnitte 16b2a ... 16b2d der jeweiligen zweiten Teil-Leiter 16b2 ... 16d2 mit den jeweiligen oberen zweiten Teil-Leiter-Abschnitten 16b1b ... 16d1b der zweiten bis vierten oberen Teil-Leiter 16b1 ... 16d1 der der zweiten bis vierten Leiter-Abschnitt 16b ... 16d verbunden. Hieraus ergibt sich eine wechselseitige Überkreuzung U der Leitungsführung durch die einzelnen Teil-Leiter-Abschnitte der der zweiten bis vierten Teil-Leiter 16b ... 16d.

Bei der in Fig. 4a veranschaulichten Windung Wn der Ständer-Spule 16 sind die Teil-Leiter 16a1, 16a2 ... 16d1, 16d2 des jeweiligen Leiter-Abschnitts 16a ... 16d im zweiten Wicklungskopf 16w' (in Fig. 4a in der Mitte der Windung Wn) paarweise in einer wechselseitigen Überkreuzung U verbunden. Dazu sind die im Bereich des Wicklungskopfes 16w' befindlichen Teil-Leiter-Abschnitte 16a1b, 16a1c, 16a2b, 16a2c; ... 16d1b, 16d1c, 16d2b, 16d2c des einen Leiter-Abschnitts 16a ... 16d mit den Teil-Leiter-Abschnitten 16a1b, 16a1c, 16a2b, 16a2c; ... 16d1b, 16d1c, 16d2b, 16d2c des benachbarten Leiter-Abschnitts 16a ... 16d in einer wechselseitigen Überkreuzung U. Mit anderen Worten sind zum Beispiel der oberste im Bereich des Wicklungskopfes 16w' befindliche Teil-Leiter-Abschnitte 16a1b mit dem zweiten im Bereich des Wicklungskopfes 16w' befindlichen Teil-Leiter-Abschnitt 16a2b verbunden; diese beiden Teil-Leiter-Abschnitte 16a1b, 16a2b sind mit den ebenfalls miteinander verbundenen beiden Teil-Leiter-Abschnitten 16b1c, 16b2b im Bereich des Wicklungskopfes 16w' verbunden. Gleichermaßen sind die im Bereich des Wicklungskopfes 16w' befindlichen Teil-Leiter-Abschnitte 16b1b mit dem im Bereich des Wicklungskopfes 16w' befindlichen Teil-Leiter-Abschnitt 1622b verbunden; diese beiden Teil-Leiter-Abschnitte 16b1b, 16b2b sind mit den ebenfalls miteinander verbundenen beiden Teil-Leiter-Abschnitten 16a1c, 16a2c im Bereich des Wicklungskopfes 16w' verbunden. Diese wechselseitige Überkreuzung U der Leitungsführung durch die einzelnen Teil-Leiter-Abschnitte der oberen beiden Teil-Leiter 16a und 16b wiederholt sich bei mit der wechselseitigen Überkreuzung der Leitungsführung durch die einzelnen Teil-Leiter-Abschnitte der unteren beiden Teil-Leiter 16c und 16d.

Daran schließt sich eine überkreuzte Leitungsführung wie oben beschrieben durch die einzelnen Teil-Leiter-Abschnitte innerhalb der jeweiligen Leiterabschnitte 16a ... 16d an.

Im Bereich des in Fig. 4 linken Wicklungskopfes 16w sind die Enden der Teil-Leiter-Abschnitte 16a1d und 16a2d der Teil-Leiter 16a1 und 16a2 jeweils mit einander verbunden, und die Enden der Teil-Leiter-Abschnitte 16b1d und 16b2d der Teil-Leiter 16b1 und 16b2 jeweils mit einander verbunden. Gleichermaßen sind die die Enden der Teil-Leiter-Abschnitte 16c1d und 16c2d der Teil-Leiter 16c1 und 16c2 jeweils mit einander verbunden, und die Enden der Teil-Leiter-Abschnitte 16d1d und 16d2d der Teil-Leiter 16d1 und 16d2 jeweils mit einander verbunden.

Wie in Fig. 4 gezeigt, haben zwei zueinander benachbarte der Windungen W1 ... W6 eine gerade Anzahl an Leiter-Abschnitten 16a ... 16d. Die Leiter-Abschnitte 16a ... 16d zweier benachbarter Windungen W1 ... W6 sind zwischen dem Nut-Grund 12c und dem Luftspalt 20 übereinander angeordnet. Wie vorstehend beschrieben sind bei beiden der zwei Windungen jeweils eine obere Hälfte der Leiter-Abschnitte 16a, 16b und eine untere Hälfte der Leiter-Abschnitte 16c, 16d im Bereich eines Wicklungskopfes 16w in einer wechselseitigen Überkreuzung U verbunden. Die obere Hälfte der miteinander verbundenen Leiter-Abschnitte 16a, 16b, der oberen der zwei Windungen ist mit der unteren Hälfte der miteinander verbundenen Leiter-Abschnitte 16c, 16d der unteren der zwei Windungen verbunden, und die untere Hälfte der miteinander verbundenen Leiter-Abschnitte 16c, 16d der oberen der zwei Windungen ist in einer wechselseitigen Überkreuzung U mit der oberen Hälfte der miteinander verbundenen Leiter-Abschnitte 16a, 16b der unteren der zwei Windungen verbunden.

Die wechselseitige Überkreuzung der Leitungsführung wird durch wechselseitige Kontaktierung der einzelnen Teil-Leiter-Abschnitte der beiden Teil-Leiter mittels Verbindern 16v im Wickelkopf und/oder entlang der langen Seiten des jeweiligen Ständer-Zahns 12a realisiert.

Insgesamt wird der Spulenaufbau durch Schichten einzelner Metall-Lagen und entsprechende Kontaktierung realisiert. Für die Isolation der einzelnen Schichten gegeneinander und die Durchkontaktierung der Isolations-Schichten sind unterschiedliche, nachstehend erläuterte Vorgehensweisen vorgesehen.

Wie in Fig. 2, 3 und 4 veranschaulicht, haben unterschiedliche Windungen der Ständer-Spule 16 eine voneinander abweichende Querschnittsfläche. Dabei sind die in der Fig. 3 höher in der Ständer-Nut 12b liegenden Leiter-Abschnitte 16a; 16b der Ständer-Spule 16 mit der geringeren Querschnittsfläche, dem Luftspalt 20 näher in den zwei Ständer-Nuten 12b angeordnet, als der tiefer in der Ständer-Nut 12b liegende Leiter-Abschnitt 16c mit der größeren Querschnittsfläche. In der Fig. 4 veranschaulichen die unterschiedlichen Strich-Stärken der einzelnen Windungen W1 ... W6 die unterschiedlichen Querschnittsflächen der Teil-Leiter abhängig von der Höhen-Lage der jeweiligen Windung in der Ständer-Nut 12b. Bei einer Ständer-Spule 16 mit zum Beispiel 6 Windungen hat jede Windung gleicher Breite in der Ständer-Nut zum Beispiel folgende Dicke der einen Teil-Leiter bildenden Metall-Lage, wobei Windung 6 nahe dem Nut-Grund, und Windung 1 nahe dem Luftspalt angeordnet ist und jede Windung aus übereinander 8 angeordneten Teil-Leitern (siehe z.B. Fig. 4) gebildet ist:

| Windung # | Dicke der Metall-Lage [mm] |
|---|---|
| 1 | 0,014 |
| 2 | 0,055 |
| 3 | 0,123 |
| 4 | 0,218 |
| 5 | 0,341 |
| 6 | 0,491 |

In einer Variante der Synchronmaschine 10 sinkt die Zunahme der Dicke der Windung ab der 4. Windung auf null, d.h. die Dicke der Metall-Lage in den 5. und 6. Windungen ist genauso groß wie die der 4. Windung.

Der Ständer 12 ist aus einer Vielzahl längs der Mittellängsachse M der Synchronmaschine 10 aufgestapelter Ständer-Bleche gebildet. Die Ständer-Bleche des Ständer 12 sind hergestellt aus Weicheisen (Fe), Kobalt (Co), Nickel (Ni), Silizium (Si) oder diese Materialien enthaltenden Legierungen. Zu diesen Legierungen gehören NiFe-Legierungen mit etwa 72 - etwa 83 % Ni, mit etwa 54 - etwa 68 % Ni, mit etwa 45 - etwa 50 % Ni, oder CoFe-Legierungen mit etwa 17 - etwa 50 % Co, oder FeSi- Legierungen. Die Ständer-Bleche des Ständer 12 haben eine Dicke von etwa 10 µm bis etwa 250 µm, zum Beispiel 50 µm Dicke. Nach jedem 10. - 50. Ständer-Blech, zum Beispiel nach jedem 30. Ständer-Blech, befindet sich eine Graphitfolie mit einer Dicke von etwa 10 µm bis etwa 100 µm, zum Beispiel 50 µm Dicke, in dem Stapel der Ständer-Bleche. Diese Graphitfolie dient zur Entwärmung des Ständers 12 insbesondere in Richtung eines äußeren Umfangs. Von dort kann die Wärme mit nicht näher veranschaulichten axial verlaufenden Kühlkanälen sehr effizient abgeführt werden. Anstelle einer Graphitfolie sind in einer Variante alle oder einige der Ständer-Bleche mit Graphen oder DLC - diamond-like carbon - beschichtet.

In den Fig. 1 bis 4 ist veranschaulicht, dass jeder Leiter-Abschnitt 16a; 16b; 16c einen der Ständer-Zähne 12a wenigstens einmal zumindest annähernd vollständig umgibt.

In der Fig. 4 ist auch im Detail veranschaulicht, wie zumindest bei dem Luftspalt 20 näheren Leiter-Abschnitten 16a; 16b die Teil-Leiter 16a1, 16a2; 16b1, 16b2 des jeweiligen Leiter-Abschnitts 16a; 16b entlang der Erstreckung des Teil-Leiters 16a1, 16a2; 16b1, 16b2 um den jeweiligen Ständer-Zahn 12a mehrere Teil-Leiter-Abschnitte 16a1a, 16a1b, 16a1c, 16a1d; 16a2a; 16a2b, 16a2c, 16a2d; 16b1, 16b1a, 16b1b, 16b1c, 16b1d; 16b2a, 16b2b, 16b2c, 16b2d haben. Um den Skin-Effekt im Betrieb der Maschine zu verringern, sind die Teil-Leiter-Abschnitte 16a1a, 16a1b, 16a1c, 16a1d; 16a2a; 16a2b, 16a2c, 16a2d des einen Teil-Leiters 16a1; 16a2 mit den Teil-Leiter-Abschnitten 16a2b, 16a2c, 16a2d, 16a2a; 16a1b, 16alc, 16ald, 16ala des anderen Teil-Leiters 16a2; 16a1 entlang der Erstreckung der Teil-Leiter 16a1, 16a2; 16b1, 16b2 um den jeweiligen Ständer-Zahn 12a im Wechsel verbunden.

Insbesondere sind die Verbindungen 16v der Teil-Leiter-Abschnitte des einen Teil-Leiters mit den Teil-Leiter-Abschnitten des anderen Teil-Leiters so realisiert, dass der Stromfluss entlang des Umfang des jeweiligen Ständer-Zahns durch die Teil-Leiter-Abschnitte des einen Teil-Leiters eines Leiter-Abschnitts genauso viele, gleich lange Stücke in derselben Höhe des Ständer-Zahns hat, wie die Teil-Leiter-Abschnitte des anderen Teil-Leiters des Leiter-Abschnitts.

Diese den jeweiligen Wechsel bewirkenden Verbindungen 16v sind in den hier veranschaulichten Varianten sowohl in den beiden Wicklungs-Köpfen, in der Fig. 4 in der Zeichnung an den beiden kurzen Seiten des jeweiligen Ständer-Zahns 12a, als auch an den beiden langen Seiten des jeweiligen Ständer-Zahns 12a vorgesehen.

Es ist in Varianten der Maschine jedoch auch vorgesehen, die den jeweiligen Wechsel bewirkenden Verbindungen 16v wahlweise nur in den beiden Wicklungs-Köpfen oder nur an den beiden langen Seiten des jeweiligen Ständer-Zahns 12a vorzusehen. Es ist in Varianten der Maschine auch vorgesehen, an den beiden langen Seiten des jeweiligen Ständer-Zahns 12a mehr als nur eine den jeweiligen Wechsel bewirkende Verbindung 16v vorzusehen. Es ist in Varianten der Maschine auch vorgesehen, bei unteren in der Ständer-Nut 12c befindlichen Windungen W3 ... W6 (in der Fig. 4) kein kreuzweises Wechseln der Leitungsführung zwischen den Teil-Leiter-Abschnitten in der Ständer-Nut 12c vorzusehen, sondern lediglich im Bereich der Wickelköpfe ein kreuzweises Wechseln der Leitungsführung zwischen den Teil-Leitern. Außerdem ist in Varianten der Maschine auch realisiert, bei den beiden untersten in der Ständer-Nut 12c befindlichen Windungen W5 und W6 (in der Fig. 4) lediglich zwei Leiter-Abschnitte 16a, 16b ohne kreuzweises Wechseln der Leitungsführung zwischen den Teil-Leiter-Abschnitten vorzusehen. Beim Einsatz von unterschiedlich dicken Metall-Lagen kann das kreuzweises Wechseln der Leitungsführung zum Grund der Ständer-Nut hin entfallen, da die Verluste abnehmen. Im Bereich der obersten Windungs-Lagen ist das kreuzweise Wechseln der Leitungsführung von Vorteil. Diese Art des Aufbaus reduziert den Anteil der Isolations-Schichten und erhöht den Kupferanteil in der Nut ohne Zusatzverluste zu erzeugen, was dem Wirkungsgrad steigert.

Die Teil-Leiter-Abschnitte 16a1a ... 16b2d des Teil-Leiters eines Leiter-Abschnitts sind in einer Variante als Ausschnitte aus elektrisch leitenden Metall-Platten oder Metall-Folien, umfassend Kupfer (Cu), Aluminium (Al) oder dergl. gebildet. Zumindest an einigen der Ober-, Unter- oder Seiten-Flächen dieser Ausschnitte sind diese gegeneinander und/ oder gegen Wände der Ständer-Nuten 12b und/ oder des Ständer-Zahns 12a durch Isolations-Schichten 22 elektrisch isoliert. Wenigstens einige der Teil-Leiter-Abschnitte können zumindest abschnittsweise verrundete Kanten aufweisen. Das Verrunden der Kanten verbessert das Anhaften der Isolations-Schichten 22 an den Teil-Leiter-Abschnitten und wirkt Coronaentladungen entgegen.

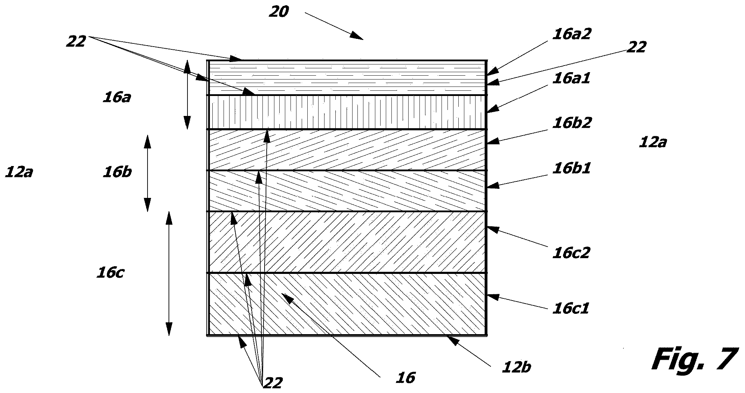

Fig. 7 veranschaulicht, dass die Isolations-Schichten 22 Epoxid-Harz, halogenfreies Epoxid-Harz, PTFE, PEEK, Polyimid, Polyamid, anodisch oder kathodisch aufgebrachten Tauchlack, elektrostatischen Pulverlack, durch PVD, CVD oder nass-chemisch aufgebrachte und/oder eloxierte Aluminium-Schicht, Keramik-Beschichtung aus z.B. Al2O3, AIN, Si3N4, Glas oder dergl. aufweisen können. Diese Isolations-Schichten 22 können eine Schichtdicke in einem Bereich von 30 µm bis 3 µm, oder weniger als 15 µm aufweisen. Hieraus ergibt sich für die Teil-Leiter-Abschnitte zum Beispiel ein Kupferkern, auf den an seinem Mantelflächen Aluminiumschicht aufgedampft ist, die wiederum eloxiert ist. Die eloxierte Aluminiumschicht bildet die Isolations-Schicht 22. Hieraus ergibt sich ein Volumenverhältnis von bis zu 95 % Kupferleiter zu etwa 5 % Isolations-Schicht.

Die Teil-Leiter-Abschnitte haben gegenüber wenigstens einigen, hier den waagrechten ihrer Isolations-Schichten 22 Untermaß oder zumindest annähernd Gleichmaß, insbesondere in Richtung einer seitlichen Wand der Ständer-Nut 12b und/oder des Ständer-Zahns 12a. Damit wird sichergestellt, dass die Spannungsfestigkeit in jedem Fall gewährleistet ist. Die Isolationsspannung der Windungen zueinander muss ca. 100 Vac betragen und die Isolationsspannung zum Ständer-Blechpaket ca. 1000 Vac. Deshalb ist zum Ständer-Blechpaket hin eine zusätzliche wärmeleitende Isolation (z.B. aus Al2O3) erforderlich.

In einer Variante sind die Teil-Leiter-Abschnitte und die Isolations-Schichten 22 als zwei- oder mehrlagige Spulenstrukturen mit zum Beispiel flexibler Leiterplatte, Glasplatte oder Keramikplatte als Verbindungschicht in Form von Direct Copper Bonded - DCB - Substrate, Direct Bond Copper- DBC - Substrate, Copper Plated Ceramic - CPC - Substrate als Verbindungsschicht ausgestaltet. Dabei sind in einer Variante Durchkontaktierungsflächen zum wechselnden Verbinden der Teil-Leiter-Abschnitte des einen Teil-Leiters mit den Teil-Leiter-Abschnitten des anderen Teil-Leiters entlang der Erstreckung der Teil-Leiter vorgesehen.

In einer Variante sind die Teil-Leiter-Abschnitte des einen Teil-Leiters mit den Teil-Leiter-Abschnitten des anderen Teil-Leiters entlang der Erstreckung der Teil-Leiter mittels Silbersinterung verbunden.

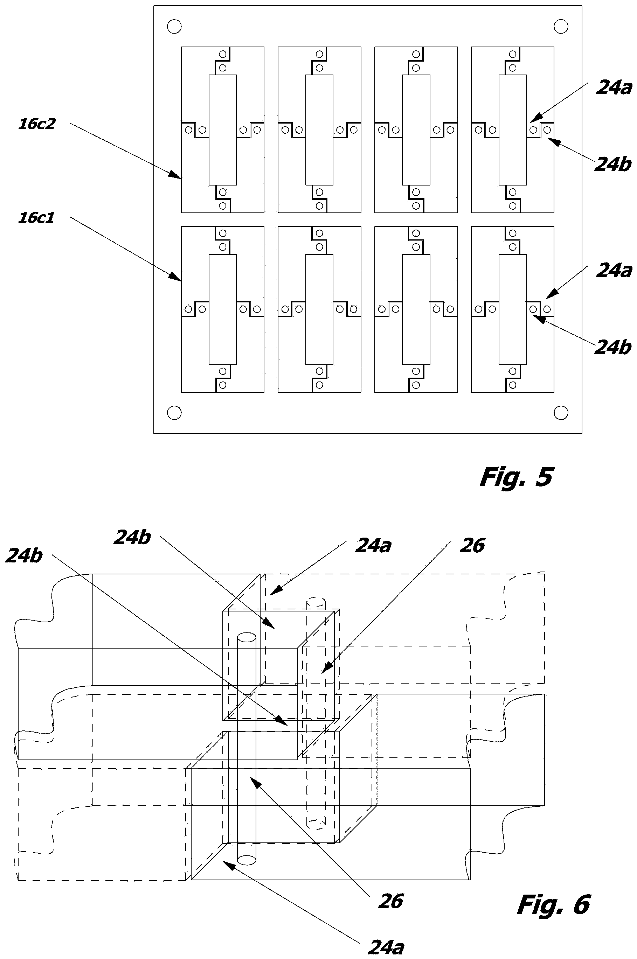

In einer Variante sind die Leiter-Abschnitte 16a; 16b der Ständer-Spule 16 mit unterschiedlicher Querschnittsfläche durch zum Beispiel laserverschweißte oder laserverlötete Vertikalverbinder verbunden. Dies ist in Fig. 5 und 6 veranschaulicht. In Fig. 5 sind die aus zum Beispiel Kupfer- oder Aluminium-Blech im Nutzen durch Wasserstrahl-Schneiden, LaserSchneiden, Fräsen oder anderweitig auszuformenden Teil-Leiter-Abschnitte eines Teil-Leiters dargestellt. Dabei sind die in Fig. 5 oberen Teil-Leiter-Abschnitte eines Teil-Leiters über die in Fig. 5 unteren Teil-Leiter-Abschnitte des Teil-Leiters zu legen. In Fig. 6 ist vergrößert veranschaulicht, wie die übereinander gelegten Teil-Leiter-Abschnitte der beiden Teil-Leiter elektrisch zu verbinden sind. Dabei überragen Endabschnitte 24a der einzelnen Teil-Leiter-Abschnitte des einen Teil-Leiters Endabschnitte 24b der anderen Teil-Leiter-Abschnitte des anderen Teil-Leiters einander wechselseitig in seitlicher Erstreckung. Durch diese einander überragenden Endabschnitte 24a, 24b der beiden Teil-Leiter reichen vertikale Verbinder-Stifte 26 hindurch. Diese seitlich nebeneinander angeordneten vertikalen Verbinder-Stifte 26 oder Kontakt-Stifte realisieren die in Fig. 4 veranschaulichten sich überkreuzenden Verbindungen 16v.

In einer nicht näher veranschaulichten Variante haben die Teil-Leiter-Abschnitte der Teil-Leiter Flachsenkungen zur Kontaktierung miteinander oder mit Anschlüssen zu einer Ansteuerelektronik. Dabei können zumindest einige der Teil-Leiter-Abschnitte der Teil-Leiter im Bereich der Flachsenkungen mittels Kontakt-Stiften oder Schweißpunkten verbunden sein. Die Leiter-Abschnitte der Ständer-Spule haben in einer im äußeren Bereich zumindest eines ihrer Wickelköpfe Verbinder A1, A2 (siehe Fig. 4) zu benachbarten Leiter-Abschnitten und/oder zu einer Ansteuerelektronik.

Die Teil-Leiter-Abschnitte sind in einer Variante aus kupfer- oder aluminiumhaltigen Strukturen durch Stanzen oder Schneiden gebildet, mit einer Keramikplatte, einer flexiblen Leiterplatte oder einer Glasplatte als Isolations-Schicht. Dabei können die Teil-Leiter-Abschnitte miteinander diffusionsverschweißt sein. Durchkontaktierungsstellen können mit einer Erhöhung vorgesehen sein, die in einem Hoch-Prägevorgang hergestellt sind. Die Teil-Leiter-Abschnitte können hierbei zumindest teilweise verrundete Kanten aufweisen und umlaufend mit einer Keramikschicht oder einer Kunststoffschicht als Isolations-Schicht versehen sein, wobei die Isolations-Schicht eine Dicke von 10 - 100 µm bzw. eine Dicke von 5 - 50 µm hat.

Die Teil-Leiter-Abschnitte können auch Flachsenkungen aufweisen zur Durchkontaktierung.

Zumindest einige der Teil-Leiter sind mit einem oder mehreren benachbarten Teil-Leitern mittels Kontakt-Stiften verbunden. Weiterhin haben die Leiter-Abschnitte 16a; 16b der Ständer-Spule 16 im äußeren Bereich zumindest eines ihrer Wickelköpfe Verbinder A1, A2 zu benachbarten Leiter-Abschnitten und/oder einer Ansteuerelektronik.

In einer weiteren Variante der Maschine ist der wenigstens eine, dem Luftspalt 20 näher oder am nächsten liegende Leiter-Abschnitt der Ständer-Spule 16 mit der geringeren Querschnittsfläche zumindest mit einer Windung versehen, die aus einer HF-Litze gebildet ist. Die HF-Litze ist mit einem dem Luftspalt 20 ferner liegenden Leiter-Abschnitt verbunden, zum Beispiel durch Ultraschall-Reibschweißen.

Die vorangehend beschriebenen Varianten der Vorrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Eine mehrphasige permanenterregte Synchronmaschine (10), mit einem Ständer (12) und einem Läufer (14) in Außen- oder Innenläuferkonfiguration; wobei
- der Ständer (12) zu bestromende Ständer-Spulen (16), und der Läufer (14) Permanentmagnet-Elemente (18) aufweist, und der Ständer (12) unter Bildung eines Luftspaltes (20) von dem Läufer (14) beabstandet ist;
- der Ständer (12) mehrere Ständer-Zähne (12a) aufweist, die unter Bildung mehrerer Ständer-Nuten (12b) voneinander beabstandet sind;
- jede Ständer-Spule (16) wenigstens einen der Ständer-Zähne (12a) unter Bildung zweier Wicklungs-Köpfe (16w, 16w') an kurzen Seiten der Ständer-Zähne (12a) wenigstens einmal zumindest annähernd vollständig umgebend, in zwei Ständer-Nuten (12b) an langen Seiten der Ständer-Zähne (12a) aufgenommen ist;
- jede der Ständer-Spulen (16) wenigstens zwei Leiter-Abschnitte (16a; ... 16d) aufweist, wobei die wenigstens zwei Leiter-Abschnitte (16a; ... 16d) zusammen jeweils wenigstens eine Windung (W1, ... W6) der jeweiligen Ständer-Spule (16) bilden;
- jeder der wenigstens zwei Leiter-Abschnitte (16a; .... 16d) jeweils in wenigstens zwei, im Querschnitt zumindest annähernd gleiche, gegeneinander elektrisch isolierte Teil-Leiter (16a1, 16a2; ... 16d1, 16d2) gegliedert ist;
- zumindest bei den näher an dem Luftspalt (20) liegenden Windungen (W1 ... W5) die Teil-Leiter (16a1, 16a2; ... 16d1, 16d2) des jeweiligen Leiter-Abschnitts (16a; ... 16d) entlang der Erstreckung des Teil-Leiters (16a1, 16a2; ... 16d1, 16d2) um den jeweiligen Ständer-Zahn (12a) wenigstens zwei Teil-Leiter-Abschnitte (16a1a, 16a1b, 16a1c, 16a1d; 16a2a; 16a2b, 16a2c, 16a2d; ... 16d1a; 16d1b, 16d1c, 16d1d; 16d2a, 16d2b, 16d2c, 16d2d) aufweisen; und
- die Teil-Leiter-Abschnitte (16a1a, 16a1b, 16a1c, 16a1d; 16a2a; 16a2b, 16a2c, 16a2d; ... 16d1a; 16d1b, 16d1c, 16d1d; 16d2a, 16d2b, 16d2c, 16d2d) des einen Teil-Leiters (16a1, 16a2; ... 16d1, 16d2) mit den Teil-Leiter-Abschnitten (16a1a, 16a1b, 16a1c, 16a1d; 16a2a; 16a2b, 16a2c, 16a2d; ... 16d1a; 16d1b, 16d1c, 16d1d; 16d2a, 16d2b, 16d2c, 16d2d) des anderen Teil-Leiters (16a1, 16a2; ... 16d1, 16d2) entlang der Erstreckung der Teil-Leiter (16a1, 16a2; ... 16d1, 16d2) im Wechsel verbunden sind.

2. Die mehrphasige permanenterregte Synchronmaschine (10) nach dem vorhergehenden Anspruch, wobei
- zumindest bei den näher an dem Luftspalt (20) liegenden Windungen (W1 ... W5) die im Bereich des einen Wicklungskopfes (16w') befindlichen Teil-Leiter-Abschnitte (16a1b, 16a1c, 16a2b, 16a2c; ... 16d1b, 16d1c, 16d2b, 16d2c) des einen Leiter-Abschnitts (16a ... 16d) mit den Teil-Leiter-Abschnitten (16a1b, 16a1c, 16a2b, 16a2c; ... 16d1b, 16d1c, 16d2b, 16d2c) eines anderen, beispielsweise benachbarten, Leiter-Abschnitts (16a ... 16d) im Wechsel verbunden sind.

3. Die mehrphasige permanenterregte Synchronmaschine (10) nach einem der vorhergehenden Ansprüche, wobei
- zumindest zwei zueinander benachbarte der Windungen (W1 ... W6) eine gerade Anzahl an Leiter-Abschnitten (16a ... 16d) aufweisen;
- die Leiter-Abschnitte (16a ... 16d) der zwei benachbarten Windungen (W1 ... W6) zwischen dem Nut-Grund (12c) und dem Luftspalt (20) übereinander angeordnet sind;
- bei beiden der zwei Windungen jeweils eine obere Hälfte der Leiter-Abschnitte (16a, 16b) und eine untere Hälfte der Leiter-Abschnitte (16c, 16d) im Bereich eines Wicklungskopfes (16w) miteinander verbunden sind; und
- die obere Hälfte der miteinander verbundenen Leiter-Abschnitte (16a, 16b) der oberen der zwei Windungen mit der unteren Hälfte der miteinander verbundenen Leiter-Abschnitte (16c, 16d) der unteren der zwei Windungen verbunden ist, und die untere Hälfte der miteinander verbundenen Leiter-Abschnitte (16c, 16d) der oberen der zwei Windungen mit der oberen Hälfte der miteinander verbundenen Leiter-Abschnitte (16a, 16b) der unteren der zwei Windungen verbunden ist.

4. Die mehrphasige permanenterregte Synchronmaschine (10) nach einem der vorhergehenden Ansprüche, wobei
- die Teil-Leiter-Abschnitte (16a1a, 16a1b, 16a1c, 16a1d; 16a2a; 16a2b, 16a2c, 16a2d; ... 16d1a; 16d1b, 16d1c, 16d1d; 16d2a, 16d2b, 16d2c, 16d2d) der Teil-Leiters (16a1, 16a2; ... 16d1, 16d2) zumindest über Wesentliche Teile ihrer Längserstreckung eine Querabmessung aufweisen, die einer Querabmessung der Ständer-Nuten (12b) im Wesentlichen entspricht.

5. Die mehrphasige permanenterregte Synchronmaschine (10) nach einem der vorhergehenden Ansprüche, wobei
- wenigstens zwei der Windungen der Ständer-Spule (16) eine voneinander abweichende Querschnittsfläche aufweisen;
- die wenigstens zwei Leiter-Abschnitte (16a; 16b; 16c; 16d) wenigstens einer der Windungen der Ständer-Spule (16) mit der geringeren Querschnittsfläche dem Luftspalt (20) näher in den Ständer-Nuten (12b) angeordnet sind, als die wenigstens zwei Leiter-Abschnitte (16a; 16b; 16c; 16d) wenigstens einer der Windungen der Ständer-Spule (16) mit der größeren Querschnittsfläche.

6. Die mehrphasige permanenterregte Synchronmaschine (10) nach einem der vorhergehenden Ansprüche, wobei
- der Ständer (12) aus einer Vielzahl längs der Mittellängsachse der Synchronmaschine (10) angeordneter Ständer-Bleche gebildet ist; und/oder
- die Ständer-Bleche Weicheisen, Kobalt, Nickel, Silizium oder Legierungen hieraus enthalten, wie NiFe-Legierungen mit etwa 72 - etwa 83 % Ni, mit etwa 54 - etwa 68 % Ni, mit etwa 45 - etwa 50 % Ni, oder CoFe-Legierungen mit 17 - 50 % Co, CoFe-Legierungen oder FeSi-Legierungen; und/oder
- die Ständer-Bleche eine Dicke von etwa 10 µm bis etwa 200 µm, zum Beispiel 50 µm Dicke, aufweisen; und/oder
- sich nach jedem 10. - 50. Ständer-Blech, zum Beispiel nach jedem 30. Ständer-Blech, eine Graphitfolie mit eine Dicke von etwa 10 µm bis etwa 100 µm, zum Beispiel 50 µm Dicke, befindet; und/oder
- jedes n-te, wobei 2 <= n <= 10, der Ständer-Bleche mit DLC oder Graphen mit einer Schichtdicke bis zu etwa 1 µm beschichtet ist.

7. Die mehrphasige permanenterregte Synchronmaschine (10) nach einem der vorhergehenden Ansprüche, wobei
- die Teil-Leiter-Abschnitte (16a1a ... 16b2d) als Ausschnitte aus elektrisch leitenden Metall-Platten oder Metall-Folien, umfassend Kupfer, Aluminium oder dergl. gebildet sind, die zumindest an einigen ihrer Ober-, Unter- oder Seiten-Flächen gegeneinander und/oder gegen Wände der Ständer-Nuten (12b) und/ oder des Ständer-Zahns (12a) durch Isolations-Schichten (22) elektrisch isoliert sind; und/oder
- die Isolations-Schichten (22) Epoxid-Harz, halogenfreies Epoxid-Harz, Polyimid, Polyamid PTFE, PEEK, anodisch oder kathodisch aufgebrachten Tauchlack, elektro-statischen Pulverlack, durch PVD, CVD oder nass-chemisch aufgebrachte und/oder eloxierte Aluminium-Schicht, Keramik-Beschichtung aus z.B. Al2O3, AIN, Si3N4, Glas oder dergl. aufweisen; und/oder
- die Isolations-Schichten (22) eine Schichtdicke in einem Bereich von 30 µm bis 3 µm, oder weniger als 15 µm aufweisen; und/oder
die Teil-Leiter-Abschnitte (16a1a ... 16b2d) verrundete Kanten aufweisen; und/oder
- die Teil-Leiter-Abschnitte (16a1a ... 16b2d) gegenüber wenigstens einigen ihrer Isolations-Schichten (22) Untermaß oder zumindest annähernd Gleichmaß, insbesondere in Richtung einer seitlichen Wand der Ständer-Nut (12b) und/oder des Ständer-Zahns (12a) aufweisen.

8. Die mehrphasige permanenterregte Synchronmaschine (10) nach einem der vorhergehenden Ansprüche, wobei
die Teil-Leiter-Abschnitte (16a1a ... 16b2d) und die Isolations-Schichten () als zwei- oder mehrlagige Spulenstrukturen mit zum Beispiel flexibler Leiterplatte, Glasplatte oder Keramikplatte als Verbindungschicht in Form von Direct Copper Bonded - DCB - Substrate, Direct Bond Copper- DBC - Substrate, Copper Plated Ceramic - CPC - Substrate als Verbindungsschicht ausgestaltet sind; und/oder
- Durchkontaktierungsflächen zum wechselnden Verbinden der Teil-Leiter-Abschnitte (16a1a, 16a1b, 16a1c, 16a1d; 16a2a; 16a2b, 16a2c, 16a2d) des einen Teil-Leiters (16a1; 16a2) mit den Teil-Leiter-Abschnitten (16a2b, 16a2c, 16a2d, 16a2a; 16a1b, 16a1c, 16a1d, 16a1a) des anderen Teil-Leiters (16a2; 16a1) entlang der Erstreckung der Teil-Leiter (16a1, 16a2; 16b1, 16b2) vorgesehen sind; und/oder
- die Teil-Leiter-Abschnitte (16a1a, 16a1b, 16a1c, 16a1d; 16a2a; 16a2b, 16a2c, 16a2d) des einen Teil-Leiters (16a1; 16a2) mit den Teil-Leiter-Abschnitten (16a2b, 16a2c, 16a2d, 16a2a; 16a1b, 16a1c, 16a1d, 16a1a) des anderen Teil-Leiters (16a2; 16a1) entlang der Erstreckung der Teil-Leiter (16a1, 16a2; 16b1, 16b2) mittels Silbersinterung verbunden sind; und/oder
- die Leiter-Abschnitte (16a; 16b) der Ständer-Spule (16) mit unterschiedlicher Querschnittsfläche durch zum Beispiel laserverschweißte oder laserverlötete Vertikalverbinder () verbunden sind; und/oder
die Teil-Leiter-Abschnitte (16a1a, 16a1b, 16a1c, 16a1d; 16a2a; 16a2b, 16a2c, 16a2d) der Teil-Leiter (16a1; 16a2) Flachsenkungen zur Kontaktierung miteinander oder mit Anschlüssen zu einer Ansteuerelektronik aufweisen;
und/oder
- zumindest einige der Teil-Leiter-Abschnitte (16a1a, 16a1b, 16a1c, 16a1d; 16a2a; 16a2b, 16a2c, 16a2d) der Teil-Leiter (16a1; 16a2) mittels Kontakt-Stiften verbunden sind; und/oder
- zumindest einige der die Teil-Leiter (16a1; 16a2) mit einem oder mehreren benachbarten Teil-Leitern (16a1; 16a2) mittels Kontakt-Stiften verbunden sind; und/oder
- die Leiter-Abschnitte (16a; 16b) der Ständer-Spule (16) im äußeren Bereich zumindest eines ihrer Wickelköpfe (16w) Verbinder zu benachbarten Leiter-Abschnitten (16a; 16b) und/oder einer Ansteuerelektronik aufweisen.

9. Die mehrphasige permanenterregte Synchronmaschine (10) nach einem der vorhergehenden Ansprüche, wobei
- die Teil-Leiter-Abschnitte (16a1a, 16a1b, 16a1c, 16a1d; 16a2a; 16a2b, 16a2c, 16a2d; 16b1, 16b1a, 16b1b, 16b1c, 16b1d; 16b2a, 16b2b, 16b2c, 16b2d) aus kupfer- oder aluminiumhaltigen Strukturen durch Stanzen oder Schneiden gebildet sind, mit einer Keramikplatte, einer flexiblen Leiterplatte oder einer Glasplatte als Isolations-Schicht (22), und/oder wobei die Teil-Leiter-Abschnitte miteinander diffusionsverschweißt sind; und/oder
- Durchkontaktierungsstellen mit einer Erhöhung vorgesehen sind, die in einem Hoch-Prägevorgang erstellt sind; und/oder
- die Teil-Leiter-Abschnitte (16a1a, 16a1b, 16a1c, 16a1d; 16a2a; 16a2b, 16a2c, 16a2d; 16b1, 16b1a, 16b1b, 16b1c, 16b1d; 16b2a, 16b2b, 16b2c, 16b2d) zumindest teilweise verrundete Kanten aufweisen; und/oder
- die Teil-Leiter-Abschnitte (16a1a, 16a1b, 16a1c, 16a1d; 16a2a; 16a2b, 16a2c, 16a2d; 16b1, 16b1a, 16b1b, 16b1c, 16b1d; 16b2a, 16b2b, 16b2c, 16b2d) umlaufend mit einer Keramikschicht als Isolations-Schicht (22) versehen sind, wobei die Isolations-Schicht (22) eine Dicke von 10 - 100 µm aufweist; und/oder
- die Teil-Leiter-Abschnitte (16a1a, 16a1b, 16a1c, 16a1d; 16a2a; 16a2b, 16a2c, 16a2d; 16b1, 16b1a, 16b1b, 16b1c, 16b1d; 16b2a, 16b2b, 16b2c, 16b2d) umlaufend mit einer Kunststoffschicht als Isolations-Schicht (22) versehen sind, wobei die Isolations-Schicht (22) eine Dicke von 5 - 50 µm aufweist;
- die Teil-Leiter-Abschnitte (16a1a, 16a1b, 16a1c, 16a1d; 16a2a; 16a2b, 16a2c, 16a2d; 16b1, 16b1a, 16b1b, 16b1c, 16b1d; 16b2a, 16b2b, 16b2c, 16b2d) Flachsenkungen aufweisen zur Durchkontaktierung;
- zumindest einige der Teil-Leiter (16a1; 16a2) mit einem oder mehreren benachbarten Teil-Leitern (16a1; 16a2) mittels Kontakt-Stiften verbunden sind; und/oder
- die Leiter-Abschnitte (16a; 16b) der Ständer-Spule (16) im äußeren Bereich zumindest eines ihrer Wickelköpfe () Verbinder zu benachbarten Leiter-Abschnitten (16a; 16b) und/oder einer Ansteuerelektronik aufweisen.

10. Die mehrphasige permanenterregte Synchronmaschine (10) nach einem der vorhergehenden Ansprüche, wobei
- bei wenigstens einer, dem Luftspalt (20) näheren Windung (Wn) der Ständer-Spule (16) Leiter-Abschnitte vorgesehen sind, die aus einer HF-Litze gebildet ist, und die HF-Litze mit einem dem Luftspalt (20) ferner liegenden Leiter-Abschnitt (16a; 16b; 16c) verbunden, zum Beispiel verschweißt ist.

11. Elektrischer Flugzeugantrieb oder Antrieb mit einer spezifischen Massenleistung von bis zu etwa 40kW/kg, umfassend eine mehrphasige permanentmagneterregte Synchronmaschine nach einem der vorhergehenden Ansprüche.
